# EUROPEAN PATENT APPLICATION

(11) **EP 0 868 093 A1**
(43) Date of publication of application: **30.09.1998**
(21) Application number: 97400711.4
(22) Date of filing: 27.03.1997
(51) Int. Cl.: H04Q 1/00, H04B 7/005, H04Q 7/32

(54) **System and method for managing power budgets**

(71) Applicant: MOTOROLA, INC., Schaumburg, IL 60196 (US)
(72) Inventor: Whinnett, Nicolas William, 75004 Paris (FR); Robinson, William Neil, 78860 St. Nom-la-Bretèche (FR); Satori, Philippe, 75020 Paris (FR)
(74) Representative: Joly, Jean-Jacques

(57) **Abstract**

A system (100) for managing a power budget comprises a base station (104), a handset (106). The handset (106) is in communication with the base station (104) and the system has a predetermined power budget (610) for a plurality of service components (602, 604, 606, 608) having corresponding respective parameters (P_{V}, P_{T}, P_{S} and P_{G}). The system is arranged to modify at least one of the corresponding respective parameters (P_{V}, P_{T}, P_{S} and P_{G}) in response to a requirement to modify the power budget (610).

## Description

### Field of the Invention

The present invention relates to a system for and a method of managing a power budget. The present invention also relates to a handset and a base station arrangement for management of a power budget.

### Background of the Invention

In proposed Code Division Multiple Access (CDMA) systems, a multimedia terminal is assigned a power budget which varies as a function of system loading and possibly terminal location. This will be a necessary feature to allow control of interference within the system and access to the system. For example, if there are a number of high rate and therefore high power multimedia users, it will be necessary to control the power of the high power multimedia users in order to allow low rate users, such as speech only users, to access the system when desired. Another example where power from a multimedia user must be controlled is when a multimedia user is in a situation involving soft-hand-off, i.e. a handset is simultaneously in communication with more than one base station, and approaching a highly loaded cell which cannot support the full capabilities of the multimedia user. Therefore, a limited power budget may be available to a multimedia user which varies as the user moves between and within cells, or with fluctuations in system loading Thus, it is necessary to control interference in the system.

Known techniques exist relating to hand-off between cells of a multimedia call in a Time Division Multiple Access (TDMA) system. However, such a system does not address the need to control interference in the system as would be necessary with a CDMA system.

It is therefore an object of the present invention to obviate or mitigate the above described problems.

### Summary of the Invention

According to a first aspect of the present invention, there is provided a system for managing a power budget, comprising a base station, a handset, the handset being in communication with the base station, the system having a predetermined power budget for a plurality of service components having corresponding respective parameters, wherein the system is arranged to modify at least one of the corresponding respective parameters in response to a requirement to modify the power budget.

According to a second aspect of the present invention, there is provided a method of managing a power budget comprising the steps of determining a power budget for a plurality of service components having corresponding respective parameters, determining whether a modification of the power budget is required, and modifying at least one of the corresponding respective parameters in response to the requirement to modify the power budget.

According to a third aspect of the present invention, there is provided a handset for management of a power budget comprising a transceiver, a processor, the processor being arranged to handle a plurality of service components having corresponding respective parameters and having a plurality of handset parameters associated with the corresponding respective parameters, wherein the handset is arranged to modify at least one of the handset parameters so as to implement a change in the corresponding respective parameters in response to a requirement to modify the power budget.

According to a fourth aspect of the present invention, there is provided a base station arrangement for management of a power budget comprising a controller and a base station arranged to handle a plurality of service components having corresponding respective parameters and having a plurality of base station parameters associated with the corresponding respective parameters, the controller being arranged to assign the power budget, wherein the base station is arranged to modify at least one of the base station parameters so as to implement a change in the corresponding respective parameters in response to a requirement to modify the power budget.

Other preferred features and advantages are set forth, and will be apparent, from the appended dependent claims, description, and drawings.

### Brief Description of the Drawings

Preferred embodiments of the invention will now be described in more detail, by way of example with reference to the accompanying drawings, in which:
FIG. 1 is a schematic diagram of a cellular telephone system;
FIG. 2 is a schematic diagram of an apparatus constituting an embodiment of the invention;
FIG. 3 is a schematic diagram of an apparatus constituting another embodiment of the invention;
FIG. 4 is a flow diagram of the operation of an uplink for the apparatus of FIG. 2;
FIG. 5 is a flow diagram of the operation of an uplink for the apparatus of FIG. 3, and
FIG. 6 is a power vs. time graph showing a change in power budget.

### Description of Preferred Embodiments

Throughout the description, identical reference numerals are used to refer to like parts.

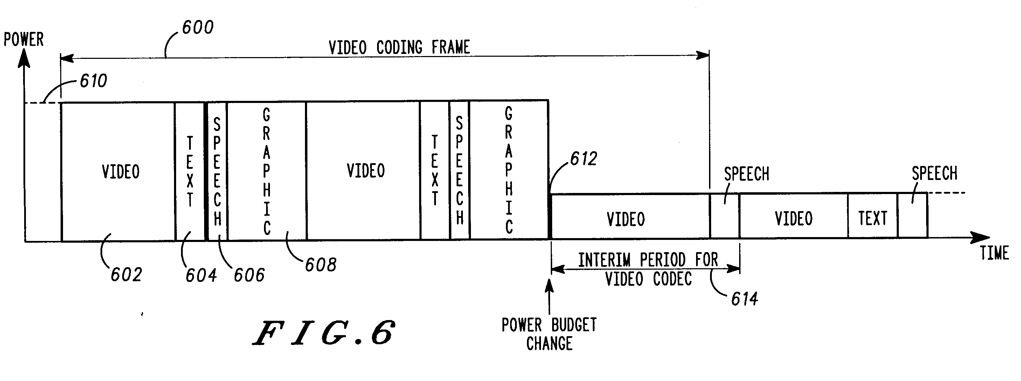

An exemplary coding frame 600 (FIG. 6) comprises a plurality of service components, for example, a video component 602, a text component 604, a speech component 606 and a graphics component 608. Each of the plurality of service components has a set of corresponding respective parameters P_{V}, P_{T}, P_{S} and P_{G}. Together, the plurality of service components constitute a multimedia service. Although, reference has been made to specific service components, it is not intended that the present invention be limited to such service components and other service components are envisaged, for example, a music component.

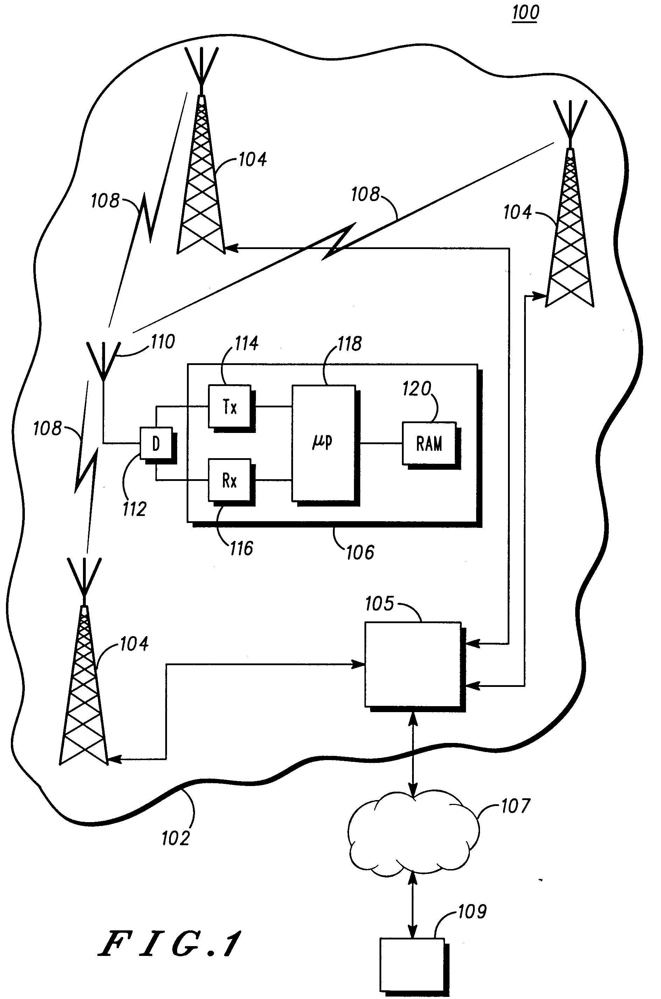

Referring to FIG. 1, a cellular CDMA system 100 having a coverage area 102 comprises a plurality of base stations 104 coupled to a base station controller 105. The controller 105 is connected via an intermediate network 107 to a receiving entity 109, for example, a laptop computer suitably equipped to support telecommunications services. For the purposes of clarity, only three base stations 104 are shown in this example, although it will be appreciated that a greater or fewer number of base stations can be employed. At least one of the base stations 104 is in communication with a handset 106, via a radio interface 108. The handset 106 comprises an antenna 110 connected to a duplexer 112 having first and second terminals (not shown), respectively connected to a transmitter 114 and a receiver 116. The transmitter 114 and the receiver 116 are each connected to a microprocessor 118 which is connected to a Random Access Memory (RAM) 120. In an alternative embodiment of the invention, the despreading of the data can be achieved using a RAKE known in the art.

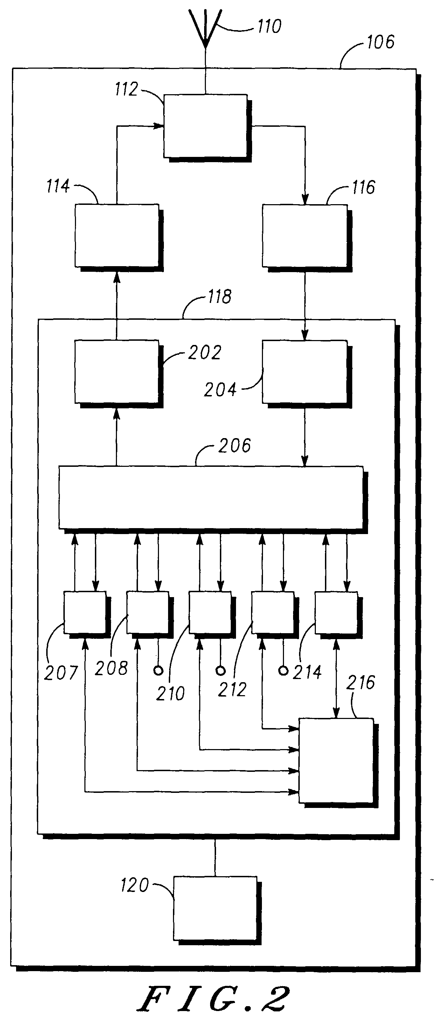

The microprocessor 118 (FIG. 2) of the handset 106 comprises a first radio unit 202 which is coupled to the transmitter 114. The first radio unit 202 is also coupled to a muliplexer/demultiplexer unit 206 and modulates, codes and spreads data received from the muliplexer/demultiplexer unit 206 before the data is sent to the transmitter 114 for transmission. Similarly, the microprocessor 118 of the handset 106 comprises a second radio unit 204 which is coupled to the receiver 116. The second radio unit 204 is also coupled to the muliplexer/demultiplexer unit 206 and demodulates, decodes and despreads data received from the receiver 116 before the data is forwarded to the muliplexer/demultiplexer unit 206.

The muliplexer/demultiplexer unit 206 is coupled to respective first, second, third and fourth signal processing units 207, 208, 210, 212 which perform respective signal processing activities for each of the plurality of service components using respective sets of local parameters PL_{V}, PL_{T}, PL_{S} and PL_{G} corresponding to the respective parameters P_{V}, P_{T}, P_{S} and P_{G}, such as including bit rate parameters, coding parameters or delay parameters.

Each of the first, second, third and fourth signal processing units 207, 208, 210, 212 is connected to a power budget controller 216 which is connected to a control channel processor 214. The control channel processor 214 is connected to and processes data from the muliplexer/demultiplexer unit 206 relating to a power budget 610 in the system. The power budget 610 is a limit on the power the handset 106 is allowed to transmit or the power the base station is allowed to transmit to a given handset. The power can be averaged in time if fast power control is employed.

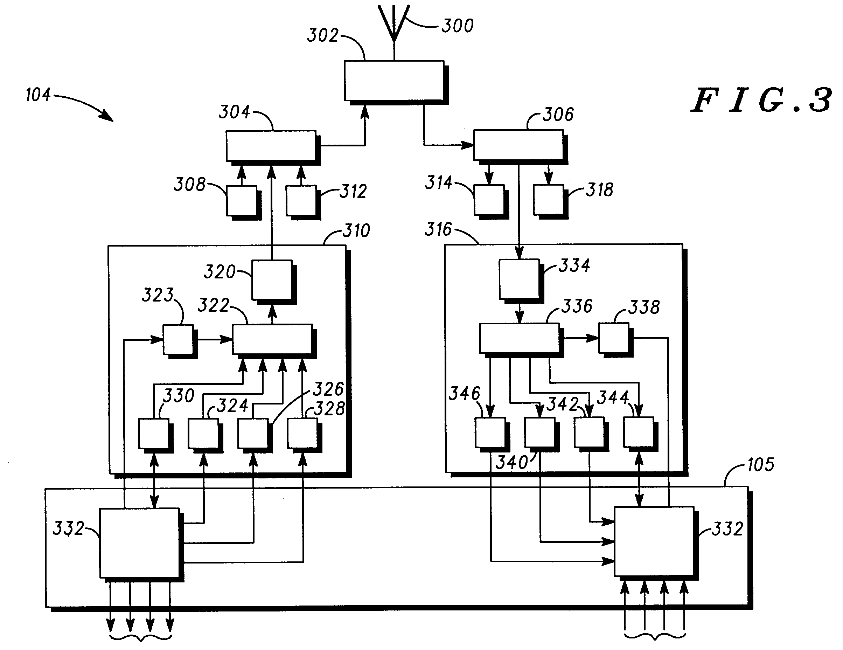

Referring to FIG. 3, each base station 104 comprises an antenna 300 connected to a duplexer 302, the duplexer 302 being connected to a multiplexer 304 and a demultiplexer 306 for respectively multiplexing and demultiplexing signals relating to data signals corresponding to a respective first, second and third user having corresponding handsets. In the present example, for the purposes of clarity, reference is only made to the second user who possesses the handset 106. The multiplexer 304 is connected to first, second and third respective user transmit units 308, 310, 312. Similarly, the demultiplexer 306 is connected to first, second and third respective user receive units 314, 316, 318.

The first, second and third user transmit units 308, 310, 312 are identical in configuration and so for simplicity and clarity of description, the second user transmit unit 310 will only be described.

The second user transmit unit 310 comprises a user transmit radio unit 320 connected to a multiplexer 322 and modulates, codes and spreads data received from the multiplexer 322. The muliplexer 322 is coupled to respective first, second, third and fourth transmit signal processing units 323, 324, 326, 328 which perform respective signal processing activities using respective sets of local base station parameters PLB_{V}, PLB_{T}, PLB_{S} and PLB_{G} corresponding to the respective parameters P_{V}, P_{T}, P_{S} and P_{G} of the respective service components in respect of transmission of these services, and which together form the multimedia service described above.

Each of the first, second, third and fourth signal processing units 323, 324, 326, 328 is connected to a power budget controller 332 which is connected to a receive control channel processor 330; the control channel processor 330 being connected to and processing data from the muliplexer 322 relating to the power budget 610.

The power budget controller 332 can be connected to other base stations 104 in the coverage area of the cellular system 100.

The first, second and third user receive units 314, 316, 318 are also identical in configuration and so for simplicity and clarity of description, the second user receive unit 316 will only be described.

The second user receive unit 316 comprises a user receive radio unit 334 connected to a demultiplexer 336 and demodulates, decodes and despreads received data for supply to the demultiplexer 336. The demultiplexer 336 is coupled to respective first, second, third and fourth receive signal processing units 338, 340, 342, 344 which perform respective signal processing activities for the respective service components in relation to reception of these components. The signal processing units 338, 340, 342, 344, in an analogous manner, use analogous local base station parameters corresponding to the respective parameters P_{V}, P_{T}, P_{S} and P_{G} of the respective service components. In an alternative embodiment of the invention, the despreading of the data can be achieved using a RAKE known in the art.

Each of the first, second, third and fourth receive signal processing units 338, 340, 342, 344 is connected to the power budget controller 332 which is also connected to a receive control channel processor 346; the control channel processor 346 being connected to and processing data from the demultiplexer 336 relating to the power budget 610.

Although the above apparatus has been described in the context of a handset and a plurality of base stations in a cellular system, it is intended that this system be employed in any multimedia system having continuous coverage of a coverage area using a single frequency and thereby having interference considerations and the requirement of power budget management. It is not intended to limit the present invention to cellular systems and associated apparatus.

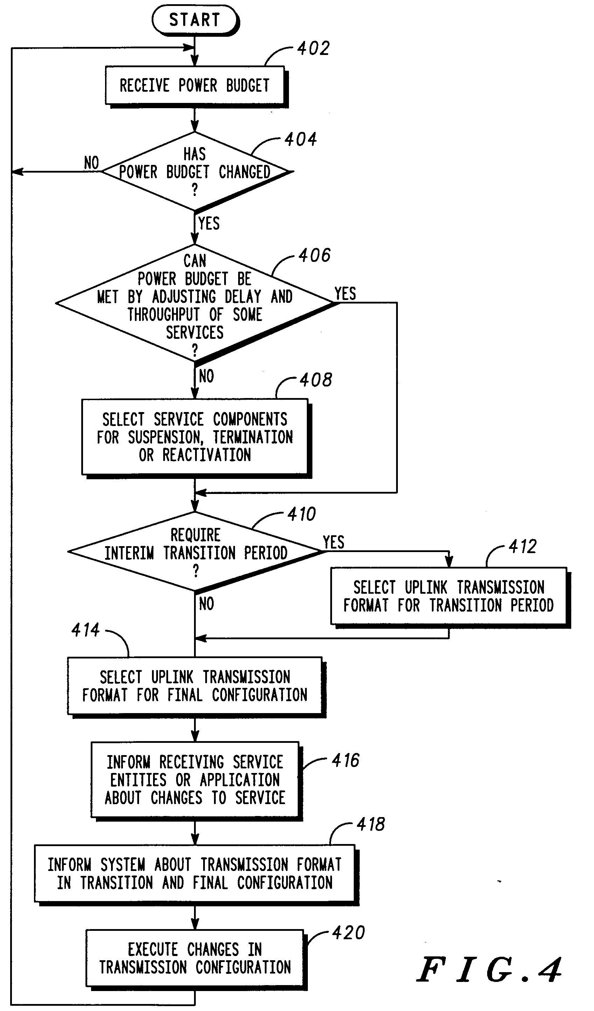

Operation of the handset 106 with respect to management of the power budget 610 will now be described with reference to FIGs. 2 and 4.

The handset 106 monitors the base stations 104 for the assignment of a new power budget 612. The handset 106 operates within the power budget 610 (FIG. 6) set by the power budget controller 332 connected to the base stations 104. Referring to FIG 4, the power budget 610 is received (step 402) by the power budget controller 216 via the control channel processor 214, the multiplexer/demultiplexer 206, the second radio unit 204, the receiver 116, the duplexer 112 and the antenna 110. The power budget controller 216 determines whether the power budget 610 has changed (step 404). If the power budget has not changed, the handset 106 continues to function normally and the power budget controller 216 awaits receipt of the power budget 610 (step 402).

If the power budget has changed, i.e. a new power budget 612 has been assigned to the handset 106, the power budget controller 216 determines whether the new power budget 612 can be met by adjustment (step 406) of delay or throughput of some of the service components 602, 604, 606, 608, taking into account priorities of the service components or minimum service requirements. The delay can be adjusted by modifying interleaving parameters. If the new power budget 612 can be met by the above adjustments, then the power budget controller 216 then determines whether an interim transitional period 614 is required (step 410), for example, to complete transmission of a video frame. If the new power budget 612 cannot be met by the above adjustments to the service components 602, 604, 606, 608, the power budget controller 216 selects one or more service component 602, 604, 606, 608 for suspension or termination (step 408), taking into account any relative priorities between the service components. In the event that the new power budget 612 is increased, the power budget controller 216 selects one or more service component 602, 604, 606, 608 for reactivation. The power budget controller 216 then proceeds to determine (step 410) whether the interim transitional period 614 is required (step 410).

It is conceivable (although not explicitly described above) to meet the power budget by a combination of the above adjustments and selection of one or more service components for suspension, termination or reactivation.

If the interim transitional period 614 is required, the power budget controller 216 selects (step 412) a temporary adjustment of the service components 602, 604, 606, 608 (also known as a temporary uplink transmission format) for the period 614 in a manner substantially the same as that described above in relation to adjustment, suspension, termination or reactivation of the service components 602, 604, 606, 608, for example, by suspending a service component, such as text or graphics, in order to complete the transmission required. After expiry of the period 614 or if the period 614 is not required, the power budget controller 216 selects (step 414) a final adjustment of the service components 602, 604, 606, 608 (also known as a final uplink transmission format) to form a final service configuration necessary to meet the new power budget 612.

Subsequently, the control channel processor 214 informs (step 416) a receiving service entity 109 or software application of the change to the service configuration. The power budget controller 332 is then informed of the changes to the service configuration for the interim transitional period 614 and the final service configurations.

Finally, the changes to the service configuration are executed (step 420), for example, by modification of one or more of the local parameters PL_{V}, PL_{T}, PL_{S} and PL_{G}. The power budget controller 216 then returns to the stage of awaiting receipt (step 402) of a new power budget as described above.

As a further example (FIG. 6), the handset 106 is transmitting speech, video, text and graphics in that order of priority, with speech accounting for 9 % of the power, video for 42 %, text for 16 % and graphics for 33 %. This initial configuration of service components is illustrated in the left hand side of FIG. 6. If the handset 106 receives (steps 402 and 404) notification that it must reduce its transmit power 50 % (3 dB), the handset 106 determines (step 406) that a video codec (not shown) for the video service component 602 supports a lower throughput mode (by dropping the resolution and update rate of the video codec) such that 30 % less energy is required, which accounts for a 13 % power reduction. The speech service must be retained without degradation and therefore the data transfer services must be adjusted to provide the remaining 37 % power reduction. The handset determines (step 408) that the graphics mode, being the lowest priority service component, must be suspended saving 33 % and the text rate must be reduced (step 406) to account for the remaining 4 % required reduction.

In the event that the interim transitional period 614 is required (step 410), the handset 106 determines (step 412) that the video part of the multimedia call cannot tolerate an immediate reduction in rate but instead needs to be maintained at the higher rate for an interim period to allow the current video frame to come to an end, and to allow signalling to the receiving video decoder about the impending change in codec parameters. To support the higher rate video during the interim period, it is determined (step 412) that the text portion of the call shall be suspended during the interim period. After the interim period, the text portion is restored.

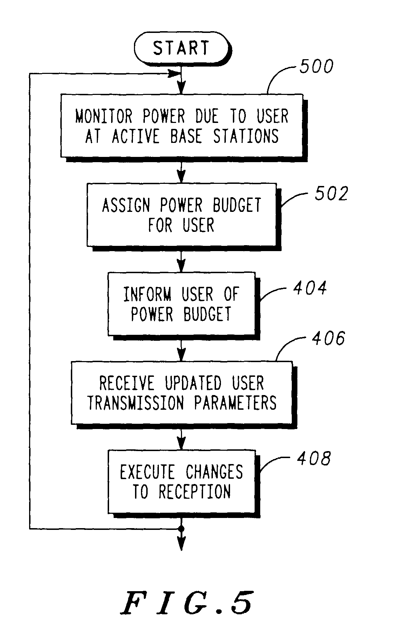

Operation of the base stations 104 with respect to the management of the power budget 610 will now be described with reference to FIGs. 3 and 5.

Referring to FIG. 5, each of the above active base stations 104 monitor (step 500) power used by the handset 106. The power budget controller 332 calculates the new power budget 612 for the handset 106 based on system loading or related interference considerations and assigns the new power budget 612 to the handset 106 (step 502).

The power budget 610 or the new power budget 612 is transmitted (step 504) to the handset 106 and the power budget controller 332 awaits (step 506) the corresponding respective parameters P_{V}, P_{T}, P_{S} and P_{G} for the service components 602, 604, 606, 608. Upon receipt of the updated corresponding respective parameters P_{V}, P_{T}, P_{S} and P_{G}, the power budget controller 332 executes changes to the local base station parameters PLB_{V}, PLB_{T}, PLB_{S} and PLB_{G} parameters of the signal processing units 338, 340, 342, 344 so that they conform to the corresponding respective parameters P_{V}, P_{T}, P_{S} and P_{G} and so to enable these units to correctly process the service components 602, 604, 606, 608 transmitted from the handset 106 within the new power budget 612.

Although the above examples have been described in the context of control of a power budget on an uplink, it is conceivable to implement the above examples in an analogous manner so as to control a power budget on a downlink. However, in the downlink case, each base station which is in communication with a handset has a separate power budget towards and associated with the handset and so the parameters relating to the service components must be determined at the handset based upon a total combined received power towards the handset from each base station.

## Claims

1. A system for managing a power budget, comprising a base station, a handset, the handset being in communication with the base station, the system having a predetermined power budget for a plurality of service components having corresponding respective parameters, wherein the system is arranged to modify at least one of the corresponding respective parameters in response to a requirement to modify the power budget.

2. A system as claimed in Claim 1, wherein the requirement to modify the power budget is based upon control of interference in the system.

3. A system as claimed in any one of the preceding claims, wherein the requirement to modify the power budget is based upon loading of the system.

4. A system as claimed in any one of the preceding claims, wherein at least one of the corresponding respective parameters is transmission delay.

5. A system as claimed in any one of the preceding claims, wherein at least one of the corresponding respective parameters is transmission throughput.

6. A system as claimed in any one of the preceding claims, wherein at least one of the corresponding respective parameters relates to source compression coding or error protection coding or interleaving or CDMA spreading factor.

7. A system as claimed in any one of the preceding claims, wherein modification of the parameters is prioritised.

8. A system as claimed in Claim 8, wherein modification of the parameters is temporarily prioritised for a predetermined period of time.

9. A system as claimed in any one of the preceding claims, wherein the requirement to modify the at least one of the corresponding respective parameters is provided by the handset.

10. A system as claimed in any one of the preceding claims, wherein a controller for the base station is arranged to provide the requirement to modify the at least one of the corresponding respective parameters.

11. A system as claimed in Claim 9, wherein the requirement to modify the at least one of the corresponding respective parameters is transmitted to the controller.

12. A system as claimed in Claim 9, wherein an end user is in communication with the handset, the requirement to modify the at least one of the corresponding respective parameters being transmitted to the user equipment.

13. A system as claimed in Claim 10, wherein the requirement to modify the at least one of the corresponding respective parameters is transmitted to the handset.

14. A system as claimed in Claim 10, wherein an end user is in communication with the base station, the requirement to modify the at least one of the corresponding respective parameters being transmitted to the user equipment.

15. A system as claimed in any one of the preceding claims, wherein modification of the corresponding respective parameters includes termination, suspension or reactivation of service of the corresponding service component.

16. A Code Division Multiple Access system comprising the system as claimed in any one of the preceding claims.

17. A method of managing a power budget comprising the steps of determining a power budget for a plurality of service components having corresponding respective parameters, determining whether a modification of the power budget is required, and modifying at least one of the corresponding respective parameters in response to the requirement to modify the power budget.

18. A handset for management of a power budget comprising a transceiver, a processor, the processor being arranged to handle a plurality of service components having corresponding respective parameters and having a plurality of handset parameters associated with the corresponding respective parameters, wherein the handset is arranged to modify at least one of the handset parameters so as to implement a change in the corresponding respective parameters in response to a requirement to modify the power budget.

19. A base station arrangement for management of a power budget comprising a controller and a base station arranged to handle a plurality of service components having corresponding respective parameters and having a plurality of base station parameters associated with the corresponding respective parameters, the controller being arranged to assign the power budget, wherein the base station is arranged to modify at least one of the base station parameters so as to implement a change in the corresponding respective parameters in response to a requirement to modify the power budget.
